(19) Europäisches Patentamt
European Patent Office
Office européen des brevets

(11) **EP 1 698 767 B1**

(12) **EUROPEAN PATENT SPECIFICATION**

(45) Date of publication and mention
of the grant of the patent:
**05.05.2010 Bulletin 2010/18**

(51) Int Cl.:
**F01N 3/08** (2006.01)   **F02D 41/02** (2006.01)
**B01D 53/96** (2006.01)

(21) Application number: **05425115.2**

(22) Date of filing: **02.03.2005**

(54) **METHOD OF ACTIVATING REGENERATION OF A NITRIC OXIDE ADSORBER**

Verfahren zur Aktivierung der Regeneration eines NOx-Adsorber

Méthode pour activer la régénération d'un adsorbeur d'oxydes d' azote

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**06.09.2006 Bulletin 2006/36**

(73) Proprietor: **C.R.F. Società Consortile per Azioni**
**10043 Orbassano (Torino) (IT)**

(72) Inventors:
• **Faraldi, Paolo**
**10043 Orbassano (IT)**
• **Asti, Massimo**
**10043 Orbassano (IT)**

• **Pidria, Marco Federico**
**10043 Orbassano (IT)**
• **Merlone Borla, Edoardo**
**10043 Orbassano (IT)**

(74) Representative: **Cerbaro, Elena et al**
**STUDIO TORTA**
**Via Viotti 9**
**10121 Torino (IT)**

(56) References cited:
**EP-A- 0 580 389    EP-A- 0 997 626**
**EP-A- 1 083 306    EP-A- 1 402 935**
**US-A- 5 771 685**

**Description**

The present invention relates to a method of activating regeneration of a nitric oxide adsorber.

As is known, diesel engine emissions comprise the following compounds, some of which are harmful to health and/or the environment:

- carbon dioxide ($CO_2$) and steam ($H_2O$), both produced by complete combustion of hydrocarbons in diesel fuel;
- unburnt hydrocarbons (HC) and carbon monoxide (CO), both produced by incomplete combustion of hydrocarbons in diesel fuel;
- nitric oxides ($NO_X$) produced by oxidation of nitrogen in the engine air intake; and
- particulate, mainly produced by incomplete combustion of the injected fuel.

Carbon monoxide and hydrocarbons are convertible to carbon dioxide and steam by the following oxidation process, which is active when the air-fuel mixture is lean, i.e. high in oxygen:

$$CO + HC + O_2 \rightarrow CO_2 + H_2O$$

Nitric oxides, on the other hand, are convertible to carbon dioxide, nitrogen, and steam by the following reduction process, which is effective when the air-fuel mixture is rich:

$$NO_x + CO + HC \rightarrow N_2 + CO_2 + H_2O$$

Otto engines can exploit the above phenomena simultaneously.

To effectively eliminate all three of the above pollutants (HC, CO, $NO_X$), the air-fuel mixture in the combustion chamber of Otto engines equipped with a trivalent catalyst must be stoichiometric, i.e. the amount of air fed into the combustion chamber must be the exact amount required to burn the fuel in the combustion chamber.

Trivalent catalysts, however, are unsuitable for use in diesel engines, operation of which calls for an air quantity in excess of stoichiometric proportions (lean operation), thus preventing reduction of nitric oxides in normal operating conditions, for the reasons stated above.

Nitric oxides produced by diesel engines, therefore, cannot be eliminated using a trivalent catalyst, and the effectiveness of a catalyst in this type of engine is limited solely to oxidizing carbon monoxide and hydrocarbons into carbon dioxide and steam.

In diesel engines, nitric oxides may be eliminated using a so-called nitric oxide adsorber, whereby, during normal operation of the engine, nitrogen monoxide (NO) is converted to nitrogen dioxide ($NO_2$) by an oxidizing element, e.g. platinum (Pt), is then trapped in an adsorbent compound, e.g. barium oxide ($BaO$), and is separated, at a specific operating stage, into nitrogen and carbon dioxide by a reducing element, e.g. rhodium (Rh). The operating stage, known as regeneration, is achieved by calibrating the diesel engine to produce a reducing environment (rich operation) in the exhaust gas for a few seconds.

During the adsorption process, the barium oxide ultimately becomes unable to store nitrogen monoxide (NO), on account of saturation of the acceptor sites; and, when the nitric oxide adsorber reaches a saturation level at which nitric oxides are no longer eliminated effectively, the acceptor sites must be "cleared" periodically by so-called regeneration, i.e. desorption and simultaneous reduction of nitric oxides.

As stated, nitric oxide adsorption and deadsorption are closely related to the composition of the air-fuel mixture during operation of the engine. That is, to adsorb nitric oxides, the air-fuel mixture must be lean (i.e. oxidizing), whereas, to desorb and reduce nitric oxides, the air-fuel mixture must be rich (i.e. reducing).

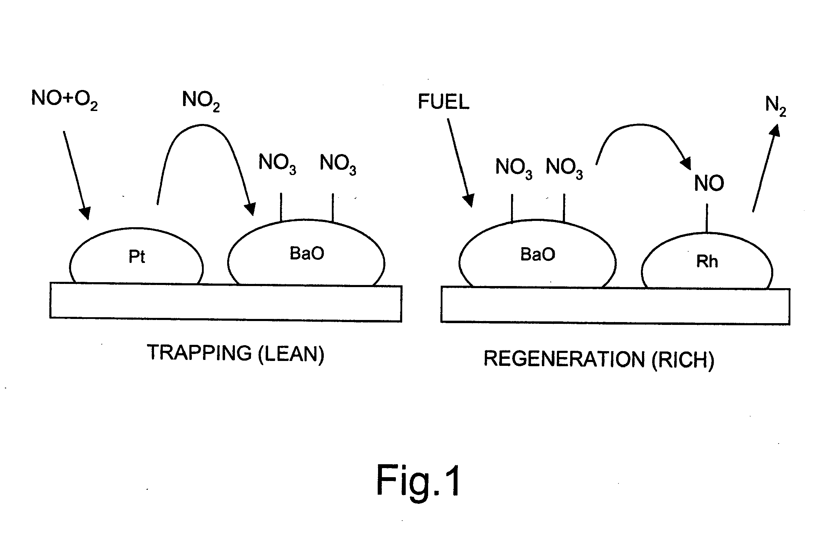

Figure 1 shows the adsorption and reduction mechanism of a nitric oxide adsorber.

More specifically, the nitric oxide adsorption and reduction mechanism commences, as stated, in lean air-fuel mixture conditions, with oxidation of nitrogen monoxide (NO) into nitrogen dioxide ($NO_2$) by the platinum (Pt) acting as a catalyst, according to the equation:

$$NO + {}^1/_2\, O_2 \rightarrow NO_2$$

Subsequently, the nitrogen dioxide ($NO_2$) reacts with the adsorbent element - barium oxide ($BaO$) in the example shown - by which it is trapped (i.e. chemically sorbed) in the form of barium nitrate ($Ba(NO_3)_2$), according to the equation:

$$BaO + NO_2 + {}^1/_2 \rightarrow O_2\, Ba(NO_3)_2$$

At the regeneration stage, the air-fuel mixture is enriched for a predetermined time period to increase carbon monoxide and unburnt hydrocarbon emissions and impart reducing properties to the exhaust gas.

The reducing atmosphere produces thermodynamic instability in the barium nitrate, which thus releases nitrogen monoxide (NO) and nitrogen dioxide ($NO_2$), according to the equations:

$$Ba(NO_3)_2 \rightarrow BaO + 2NO + \tfrac{1}{2} O_2$$

$$Ba(NO_3)_2 \rightarrow BaO + 2NO_2 + \tfrac{1}{2} O_2$$

In rich air-fuel mixture conditions, and thanks to the presence of rhodium as a catalyst, nitrogen monoxide (NO) and nitrogen dioxide ($NO_2$) are reduced by carbon monoxide (CO), hydrogen and hydrocarbons to nitrogen ($N_2$) and carbon dioxide ($CO_2$).

One possible reduction path is the equation:

$$NO + CO \rightarrow \tfrac{1}{2} + CO_2$$

The success of the process depends directly on the air-fuel mixture, and, to effectively eliminate nitric oxides, the air/fuel proportion must be monitored continuously.

Efficient operation of a nitric oxide adsorber therefore substantially depends on the ability of barium to trap nitrogen dioxide, which in turn depends on various factors, such as exhaust gas temperature, exhaust gas flow, and the number of acceptor sites available in the barium. In the best possible operating conditions, a nitric oxide adsorber effectively eliminates as much as 90% of the nitric oxides produced by the engine.

One of the factors responsible for the reduction in adsorption capacity of barium is the presence of sulphur in the fuel. Unfortunately, at temperatures of over 300°C, sulphur oxidizes to sulphur dioxide ($SO_2$), which in turn may be converted by humidity in the atmosphere to sulphur trioxide ($SO_3$); which compounds react with barium oxide in the same way as nitrogen dioxide, i.e. tend to be trapped in the barium acceptor sites in the form of barium sulphate ($BaSO_4$), so that some of the acceptor sites are permanently occupied by barium sulphate, thus preventing entrapment of part of the nitrogen dioxide, and so impairing adsorber efficiency. In fact, unlike regeneration of acceptor sites saturated with nitrogen dioxide, which occurs between 300 and 450°C, regeneration of sulphate-saturated acceptor sites requires temperatures of around 600°C.

To prevent sulphates damaging the nitric oxide adsorber, the fuel must therefore contain no sulphur or, to limit the extent of damage, must contain at most 10 ppm.

Though slow, sulphate accumulation in the adsorber is therefore inevitable, on account of small quantities being derived anyway from the lubricating oil as well as the fuel, and must be removed periodically, every 1000-4000 km, by a specific regeneration strategy combining reducing environment conditions and temperature levels of around 600°C.

The regeneration strategy of a nitric oxide adsorber is therefore clearly one of the major problems posed by automotive use of this type of catalyst.

For this purpose, nitric oxide adsorber regeneration and accumulation cycle control strategies have been proposed, which comprise a fixed-duration (about 60-second) accumulation step, during which the air-fuel mixture is lean - in particular, assumes a value (A/F) of 20 to 55 - followed by a fixed-duration (about 5-second) regeneration step, during which the air-fuel mixture is enriched - in particular, assumes a value (A/F) of 12 to 14.

Controlling nitric oxide adsorber accumulation and regeneration cycles as described above, however, is unsatisfactory in terms of consumption and pollutant emissions, by regeneration possibly being performed when not strictly necessary, or, conversely, not being performed when actually required.

EP-A-0 997 626 discloses a method to control the purging of nitrogen oxides (NOx) from an exhaust gas catalytic converter of an internal combustion engine. Nitrogen oxide storage efficiency is determined from a mathematical model deriving a value linked to the quantity of NOx stored in the catalyst. The model includes a correction factor varied as a function of a signal from a sensor, such that the value furnished by the model approaches the actual value. The corrective factor is made to increase or decrease with change in sensor output, and has a value corresponding with rich mixture, during regeneration of the catalyst over a predetermined interval. Storage efficiency is taken from a table with entries of temperature and rate of accumulation (NS/NSC) of NOx in the catalyst. Once the calculated quantity of NOx stored becomes zero, rich regeneration is terminated.

It is an object of the present invention to provide a method of activating regeneration of a nitric oxide adsorber, designed to eliminate the drawbacks of known methods.

According to the present invention, there is provided a method of activating regeneration of a nitric oxide adsorber, as claimed in Claim 1.

A preferred, non-limiting embodiment of the present invention will be described by way of example with reference to the accompanying drawings, in which:

Figure 1 shows the nitric oxide adsorption and reduction mechanism of a nitric oxide adsorber;
Figure 2 shows, schematically, an internal combustion engine exhaust system equipped with a nitric oxide adsorber;
Figure 3 shows a block diagram illustrating the principle of the method of activating regeneration of a nitric oxide adsorber according to the invention;
Figure 4 shows a more detailed block diagram of the regeneration activating method according to the invention;
Figures 5, 6 and 7 show graphs of quantities involved in the regeneration activating method according to the invention.

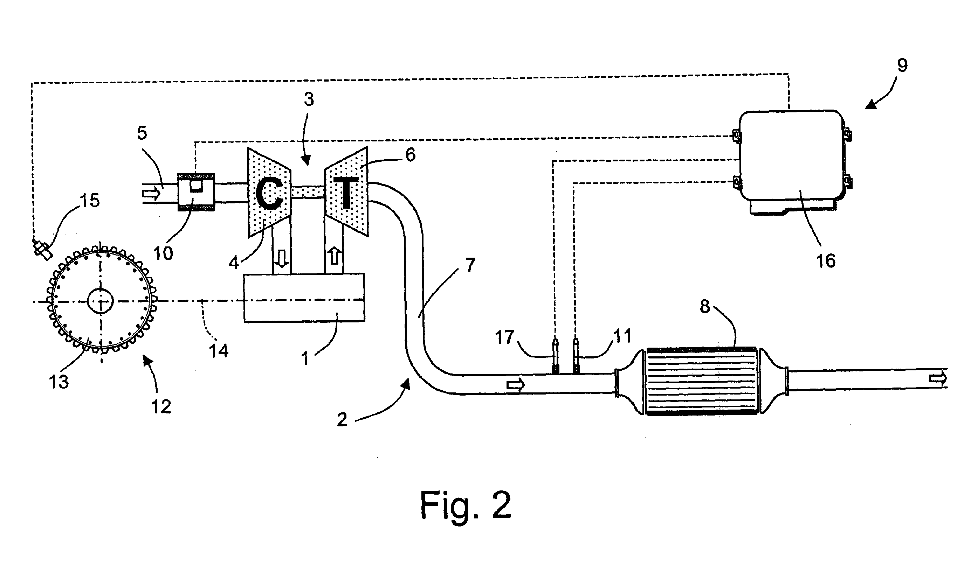

Number 1 in Figure 2 indicates schematically and as a whole an internal combustion engine - in particular, a diesel engine - having an exhaust system 2, of which are shown only the parts required for a clear understanding of the present invention.

Figure 2 shows, by way of a non-limiting example, a supercharged engine 1, i.e. comprising a turbosupercharger 3 defined by a compressor 4 located along an air intake manifold 5, and by a turbine 6 connected to compressor 4 and located along an exhaust manifold 7 of the engine.

Exhaust system 2 comprises a nitric oxide ($NO_X$) adsorber 8 located along exhaust manifold 7; and an electronic control system 9 designed, among other things, to activate regeneration of nitric oxide adsorber 8 as described below.

More specifically, electronic control system 9 comprises an airflow meter or so-called debimeter 10 located along air intake manifold 5 to measure the air intake $Q_A$ of the engine; a temperature sensor 11 located along exhaust manifold 7, at the inlet or outlet of nitric oxide adsorber 8, to measure the temperature $T_G$ of the exhaust gas flowing through nitric oxide adsorber 8; a measuring device 12 for measuring engine speed $RPM$ and defined by a pulse wheel 13 fitted to the drive shaft 14 (shown schematically by the dash-and-dot line), and by an electromagnetic sensor 15 facing pulse wheel 13; and an electronic central control unit 16 connected to debimeter 10, to temperature sensor 11, and to measuring device 12, and implementing, among other things, the method of activating regeneration of nitric oxide adsorber 8 according to the invention.

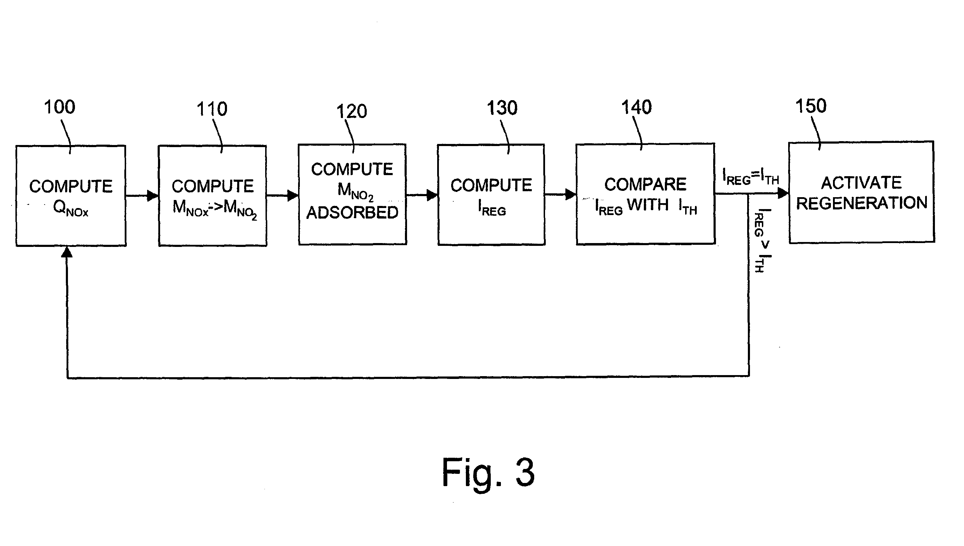

Figure 3 shows a block diagram illustrating the principle of the method of activating regeneration of nitric oxide adsorber 8 implemented by electronic central control unit 16.

Briefly, the regeneration activating method according to the invention is substantially based on determining a regeneration index indicating the residual adsorption capacity of the adsorber; comparing the regeneration index with a threshold indicating a minimum residual adsorption capacity; and activating regeneration of the nitric oxide adsorber when the regeneration index exceeds the threshold.

More specifically, as shown in Figure 3, the regeneration activating method according to the invention substantially comprises:

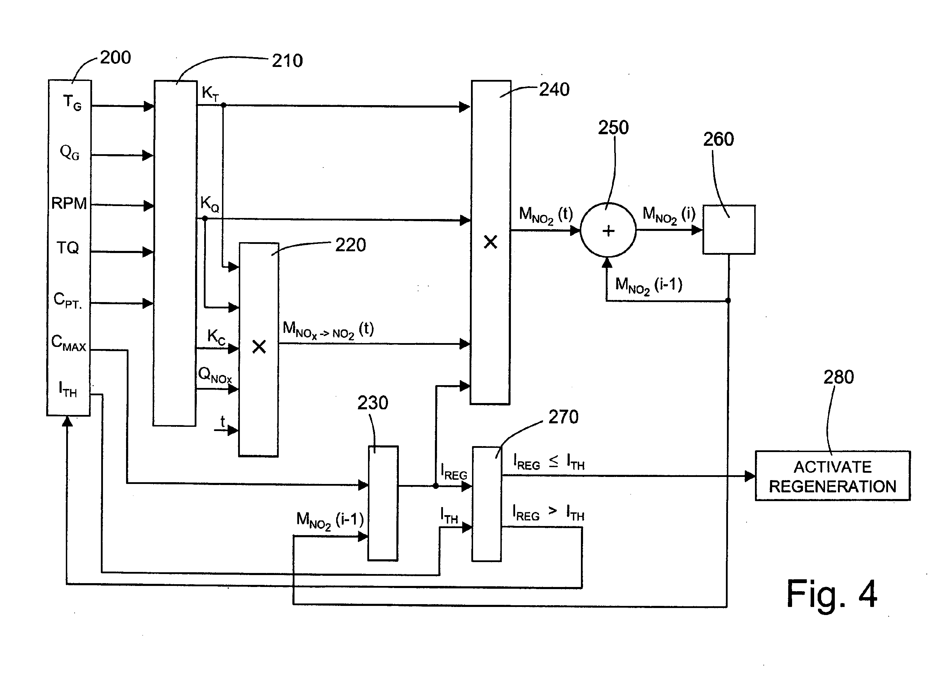

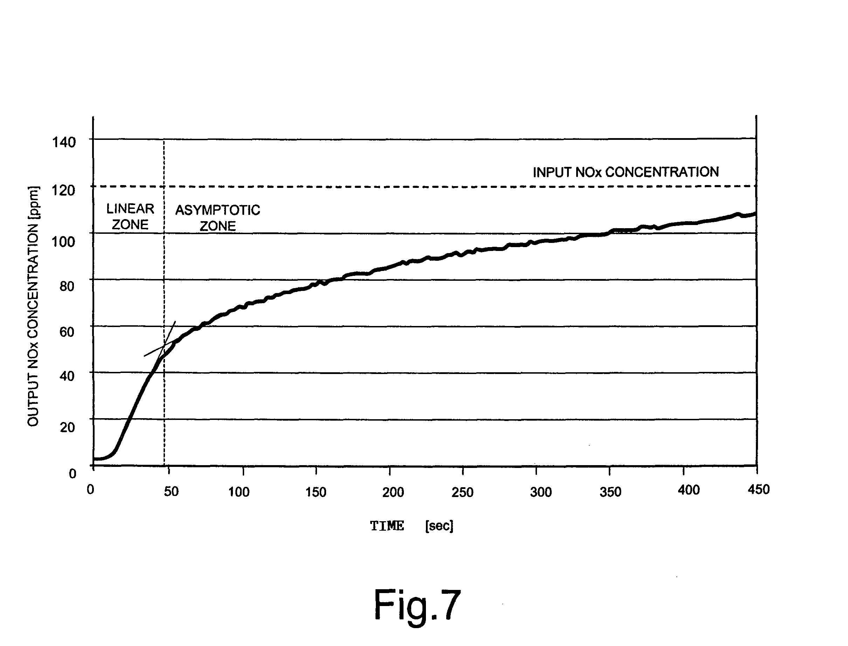

- determining nitric oxide ($NO_X$) flow through nitric oxide adsorber 8, as a function of a number of engine quantities and characteristic parameters of nitric oxide adsorber 8, as described in detail below with reference to Figure 4 (block 100);
- computing the nitric oxide ($NO_X$) quantity converted into nitrogen dioxide ($NO_2$) (block 110), as a function of a number of engine quantities and characteristic parameters of nitric oxide adsorber 8;
- computing the nitrogen dioxide ($NO_2$) quantity adsorbed by nitric oxide adsorber 8 (block 120), as a function of a number of engine quantities and characteristic parameters of nitric oxide adsorber 8;
- computing a regeneration index $I_{REG}$ indicating the residual adsorption capacity of the nitric oxide adsorber (block 130);
- comparing regeneration index $I_{REC}$ with a regeneration threshold $I_{TH}$ indicating the minimum permissible residual adsorption capacity of nitric oxide adsorber 8 determined as described below with reference to Figure 7 (block 140); and
- activating regeneration of the nitric oxide adsorber when regeneration index $I_{REC}$ is less than or equal to regeneration threshold $I_{TH}$ (block 150).

Figure 4 shows a more detailed block diagram of the regeneration activating method according to the present invention. More specifically, the operations described below are repeated periodically at a frequency related to the clock frequency of electronic central control unit 16, e.g. every 65 ms, and are therefore described with reference to one execution.

More specifically, as shown in Figure 4, electronic central control unit 16 first acquires (block 200):

- exhaust gas temperature $T_G$, and
- engine speed $RPM,$

and computes:

- engine torque *TQ* as a function of engine speed *RPM* supplied by measuring device 12, and
- mass exhaust gas flow $Q_G$ as the sum of air intake $Q_A$ supplied by debimeter 10, and the total quantity of fuel injected, which is known by electronic central control unit 16.

Electronic central control unit 16 also stores the following constants or constant vectors/matrixes, which are calibrated as a function of physical characteristics of nitric oxide adsorber 8 (block 200):

- a constant $C_{Pt}$ proportional to the concentration of the oxidizing element - in the example considered, platinum (Pt) - in nitric oxide adsorber 8;
- the maximum adsorption capacity $C_{MAX}$, in grams of nitrogen dioxide ($NO_2$), of nitric oxide adsorber 8, which, in a first-order model, may be considered substantially constant with time, and, in a second-order model, may be considered variable - in particular, may decrease - with time because of ageing of nitric oxide adsorber 8 and sulphate accumulation; and
- a regeneration threshold $I_{TH}$ used as described below.

Electronic central control unit 16 then computes (block 210):

- the flow $Q_{NOx}$, in grams per hour (g/h), of nitric oxides ($NO_X$) produced by combustion, as a function of speed *RPM* and engine torque *TQ*;
- a temperature constant or constant vector/matrix $K_T$, indicating nitric oxide ($NO_X$) to nitrogen dioxide ($NO_2$) conversion efficiency, as a function of temperature $T_G$ of the exhaust gas through nitric oxide adsorber 8;
- a flow constant or constant vector/matrix $K_Q$, indicating nitric oxide ($NO_X$) to nitrogen dioxide ($NO_2$) conversion efficiency, as a function of exhaust gas flow $Q_G$ through nitric oxide adsorber 8; and
- a concentration constant or constant vector/matrix $K_C$, indicating nitric oxide ($NO_X$) to nitrogen dioxide ($NO_2$) conversion efficiency, as a function of constant $C_{Pt}$ proportional to the concentration of platinum in nitric oxide adsorber 8.

More specifically, flow $Q_{NOx}$ of the nitric oxides ($NO_X$) produced by combustion is calculated by interpolation on the basis of an interpolation map based on engine bench tests, stored in electronic central control unit 16, and containing test-bench nitric oxide ($NO_X$) flow $Q_{NOx}$ values as a function of engine speed *RPM* and torque *TQ*.

Temperature and flow constants $K_T$ and $K_Q$ assume values of 0 to 1, and are calculated respectively as a function of exhaust gas temperature $T_G$ and flow $Q_G$, as described below.

More specifically, temperature and flow constants $K_T$ and $K_Q$ are determined experimentally by feeding a given quantity of nitrogen monoxide (NO) to the nitric oxide adsorber inlet, and measuring the quantity of nitrogen monoxide (NO), nitrogen dioxide ($NO_2$), and nitric oxides ($NO_X$) at the outlet of nitric oxide adsorber 8.

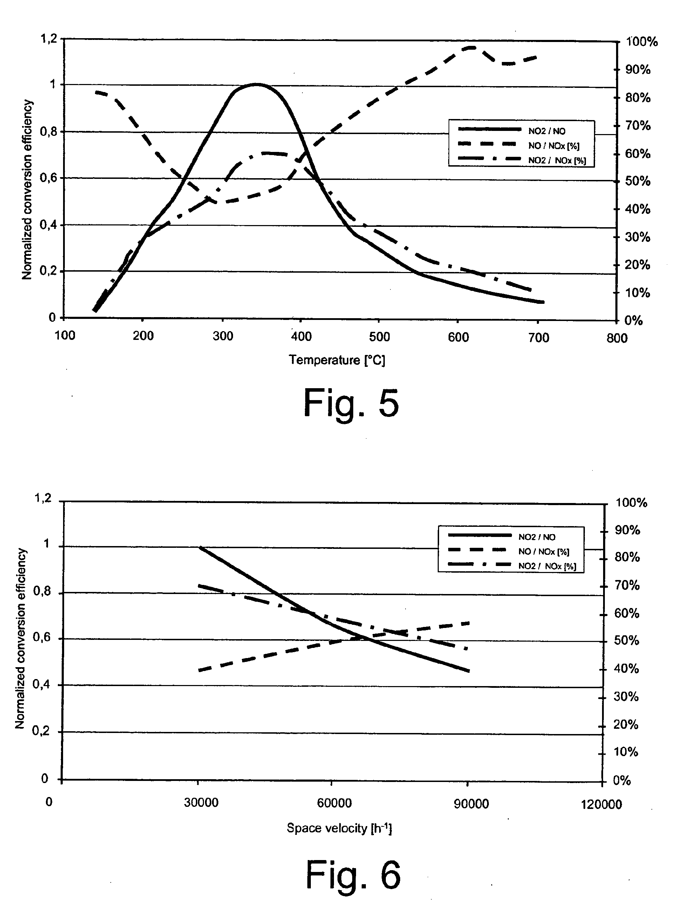

Figure 5 shows nitrogen monoxide (NO) to nitrogen dioxide ($NO_2$) conversion efficiency as a function of exhaust gas temperature $T_G$. More specifically, Figure 5 shows the normalized ratio between the quantity of nitrogen dioxide ($NO_2$) and nitrogen monoxide (NO) as a function of exhaust gas temperature $T_G$, which may be used to calibrate temperature constant or constant vector/matrix $K_T$.

Figure 6 shows nitrogen monoxide (NO) to nitrogen dioxide ($NO_2$) conversion efficiency as a function of exhaust gas space velocity $Q_G$. More specifically, Figure 6 shows the normalized ratio between the quantity of nitrogen dioxide ($NO_2$) and nitrogen monoxide (NO) as a function of exhaust gas space velocity $Q_G$. Flow constant $K_Q$ may therefore be calculated as a function of the normalized ratio according to the equation:

$$K_Q \;=\; 1 \;-\; \frac{NO_{2\,out}}{NO_{2\,in}}$$

Concentration constant or constant vector/matrix $K_C$ assumes values of 0 to 1, and is calculated as a function of constant $C_{Pt}$ proportional to the concentration of platinum in nitric oxide adsorber 8. Constant $K_C$ acts on oxidation conversion percentage absolute values, and as a weight applied to the constants described previously, and its value is determined by test comparisons of the inefficiency of different catalytic formulations with decreasing platinum loads.

With reference to Figure 4, the quantity $M_{NOx->NO2}(t)$ in grams of nitric oxides ($NO_X$) converted to nitrogen dioxide ($NO_2$) in the time interval t since the preceding computing cycle, i.e. over the last 65 ms, is then computed (block 220), according to the equation:

$$M_{NOx->NO2}(t) = Q_{NOx} \cdot K_T \cdot K_Q \cdot K_{Pt} \cdot t$$

Regeneration index $I_{REG}$ is then computed (block 230) according to the equation:

$$I_{REG} = 1 - \frac{M_{NO_2}(i - 1)}{C_{MAX}}$$

where:

- $M_{NO2}(i-1)$ is the quantity of nitrogen dioxide ($NO_2$) in grams adsorbed by the nitric oxide adsorber since the last regeneration and up to the preceding computing cycle, and which is computed as described below.

As shown clearly in the equation, regeneration index $I_{REG}$ may assume values of 0 to 1. More specifically, as soon as the nitric oxide adsorber is regenerated, $NO_2(i-1) = 0$, so that $I_{REC} = 1$; whereas, when the nitric oxide adsorber is saturated, i.e. when the quantity of nitric oxides adsorbed reaches maximum adsorption capacity, $NO_2(i-1) = C_{MAX}$, so that $I_{REG} = 0$.

Given regeneration index $I_{REG}$, the quantity $M_{NO2}(t)$, in grams, of nitrogen dioxide ($NO_2$) adsorbed by the nitric oxide adsorber in the current computing cycle, i.e. over the last 65 ms, is then computed (block 240), according to the equation:

$$M_{NO2}(t) = M_{NOx->NO2}(t) \cdot K_T \cdot K_Q \cdot K_C \cdot I_{REG}$$

The quantity $M_{NO2}(i)$, in grams, of nitrogen dioxide ($NO_2$) adsorbed by the nitric oxide adsorber since the last regeneration and up to the current computing cycle is then computed (block 250), according to the equation:

$$M_{NO2}(i) = M_{NO2}(i-1) + M_{NO2}(t)$$

The quantity $M_{NO2}(i)$ of nitrogen dioxide ($NO_2$) adsorbed is then memorized (block 260), and represents the quantity $M_{NO2}(i-1)$ used in the next computing cycle to compute the next regeneration index $I_{REG}$ and the next quantity $M_{NO2}(i)$ of nitrogen dioxide ($NO_2$) adsorbed.

Regeneration index $I_{REG}$ is then compared with a regeneration threshold $I_{TH}$ (block 270) : if $I_{REG}$ is greater than $I_{TH}$, this means not all the nitric oxide adsorber acceptor sites are saturated, so that regeneration of nitric oxide adsorber 8 is not yet indispensable, and the entire computing cycle described above is repeated; conversely, when $I_{REG}$ is equal to or less than $I_{TH}$, the adsorption capacity of the acceptor sites of nitric oxide adsorber 8 is considered nil, and regeneration of the nitric oxide adsorber is therefore activated as described initially, i.e. by enriching the air-fuel mixture to a value (A/F) of 12 to 14 (block 280) .

Regeneration threshold $I_{TH}$ is determined as a function of the instantaneous adsorption efficiency of nitric oxide adsorber 8, as described below with reference to Figure 7, which shows a time graph of nitric oxide concentration at the outlet of nitric oxide adsorber 8. As can be seen, the graph comprises a substantially straight initial portion, in which nitric oxide concentration increases steadily with time (i.e. the instantaneous adsorption efficiency of nitric oxide adsorber 8 decreases steadily with time), followed by a portion which tends towards an asymptote represented by the nitric oxide concentration at the inlet of nitric oxide adsorber 8 (i.e. the instantaneous adsorption efficiency of nitric oxide adsorber 8 decreases with time, tending asymptotically towards zero). From the chemical-physical standpoint, at the straight initial portion, nitric oxides are substantially adsorbed in sites close to the barium oxide layer surface, whereas, at the next asymptotic portion, nitric oxides are adsorbed in sites lower down and therefore dependent on gas permeability dynamics.

Regeneration threshold $I_{TH}$ is therefore made equal to the quantity of nitric oxides adsorbed by nitric oxide adsorber 8 in a time interval, measured as of regeneration, equal to the duration of the straight portion of the Figure 7 curve, which is computed by integrating nitric oxide flow through nitric oxide adsorber 8 for a time equal to the duration of the straight portion of the Figure 7 curve.

The advantages of the present invention will be clear from the foregoing description. In particular, as opposed to being fixed, the duration of the accumulation stage depends on the actual degree of saturation of the nitric oxide adsorber acceptor sites, so that the adsorber is only regenerated when actually saturated.

Clearly, changes may be made to the method as described and illustrated herein without, however, departing from the scope of the present invention, as defined in the accompanying Claims.

For example, the regeneration index may be calculated differently, and in particular may be equal to the ratio between the quantity of nitrogen dioxide ($NO_2$) adsorbed by the nitric oxide adsorber, and the maximum adsorption capacity ($C_{MAX}$) of the nitric oxide adsorber.

Moreover, as opposed to being based on engine quantities and characteristic parameters of nitric oxide adsorber 8, as described above, nitric oxide ($NO_X$) flow $Q_{NOx}$ through nitric oxide adsorber 8 may be computed on the basis of nitric oxide concentration in exhaust gas flow through nitric oxide adsorber 8; which concentration may, for example, be measured by a nitric oxide sensor, indicated 17 in Figure 2, located along exhaust manifold 7, at the inlet or outlet of nitric oxide adsorber 8. More specifically, nitric oxide ($NO_X$) flow $Q_{NOx}$ may be calculated as a portion of total exhaust gas flow, on the basis of the nitric oxide concentration percentage indicated by sensor 17.

Alternatively, nitric oxide ($NO_X$) flow $Q_{NOX}$ calculated on the basis of nitric oxide concentration measured by sensor 17 may be used solely to validate/check nitric oxide ($NO_X$) flow calculated on the basis of engine quantities and characteristic parameters of nitric oxide adsorber 8.

**Claims**

1. A method of activating regeneration of a nitric oxide adsorber (8), comprising:

   - determining a quantity indicating the quantity of nitric oxides ($NO_x$) adsorbed by said nitric oxide adsorber (8); and
   - activating regeneration of said nitric oxide adsorber (8) on the basis of the quantity of nitric oxides ($NO_x$) adsorbed;

   **characterized in that** determining a quantity indicating the quantity of nitric oxides ($NO_x$) adsorbed by said nitric oxide adsorber (8) comprises:

   - determining a quantity indicating the flow of nitric oxides ($NO_x$) through said nitric oxide adsorber (8) ;
   - determining a quantity indicating the quantity of nitric oxides ($NO_x$) converted to nitrogen dioxide ($NO_2$) in said nitric oxide adsorber (8); and
   - determining a quantity indicating the quantity of nitrogen dioxide ($NO_2$) adsorbed by said nitric oxide adsorber (8).

2. A method as claimed in Claim 1, wherein activating regeneration of said nitric oxide adsorber (8) comprises:

   - determining a regeneration index ($I_{REG}$) as a function of said quantity indicating the quantity of nitric oxides ($NO_x$) adsorbed by said nitric oxide adsorber (8);
   - comparing said regeneration index ($I_{REG}$) with a regeneration threshold ($I_{TH}$); and
   - activating regeneration of said nitric oxide adsorber (8) when said regeneration index ($I_{REG}$) and said regeneration threshold ($I_{TH}$) satisfy a predetermined relationship.

3. A method as claimed in Claim 2, wherein said regeneration index ($I_{REG}$) is determined as a function of said quantity indicating the quantity of nitric oxides ($NO_x$) adsorbed by said nitric oxide adsorber (8), and of a quantity indicating the maximum adsorption capacity ($C_{MAX}$) of said nitric oxide adsorber (8).

4. A method as claimed in Claim 2 or 3, wherein said regeneration index ($I_{REG}$) indicates the residual adsorption capacity of said nitric oxide adsorber (8), and said regeneration threshold ($I_{TH}$) indicates a minimum residual adsorption capacity of said nitric oxide adsorber (8); and wherein said predetermined relationship is the condition that said regeneration index ($I_{REG}$) is less than or equal to said regeneration threshold ($I_{TH}$).

5. A method as claimed in any one of the foregoing claims, wherein determining a quantity indicating the quantity of nitric oxides ($NO_x$) converted to nitrogen dioxide ($NO_2$) in said nitric oxide adsorber (8) comprises:

   - determining a conversion efficiency ($K_T$, $K_Q$, $K_{Pt}$) of nitric oxides ($NO_x$) to nitrogen dioxide ($NO_2$) in said nitric

oxide adsorber (8) ; and
- determining said quantity, indicating the quantity of nitric oxides ($NO_x$) converted to nitrogen dioxide ($NO_2$) in said nitric oxide adsorber (8), as a function of said quantity indicating the flow of nitric oxides ($NO_x$) through said nitric oxide adsorber (8), and of said conversion efficiency ($K_T$, $K_Q$, $K_{Pt}$).

6. A method as claimed in Claim 5, for a nitric oxide adsorber (8) located along an exhaust gas manifold (7) of an internal combustion engine (1), wherein determining the conversion efficiency ($K_T$, $K_Q$, $K_{Pt}$) of nitric oxides ($NO_x$) to nitrogen dioxide ($NO_2$) in said nitric oxide adsorber (8) comprises:

   - determining exhaust gas temperature ($T_G$);
   - determining exhaust gas flow ($Q_G$);
   - determining a temperature constant or constant vector/matrix ($K_T$), indicating the conversion efficiency of nitric oxides ($NO_x$) to nitrogen dioxide ($NO_2$), as a function of exhaust gas temperature ($T_G$);
   - determining a flow constant or constant vector/matrix ($K_Q$), indicating the conversion efficiency of nitric oxides ($NO_x$) to nitrogen dioxide ($NO_2$), as a function of exhaust gas flow ($Q_G$);
   - determining a concentration constant or constant vector/matrix ($K_C$), indicating the conversion efficiency of nitric oxides ($NO_x$) to nitrogen dioxide ($NO_2$), as a function of the concentration ($C_{PT}$) of an oxidizing element (Pt) in said nitric oxide adsorber (8).

7. A method as claimed in claim 6, wherein said quantity indicating the quantity of nitrogen dioxide ($NO_2$) adsorbed by said nitric oxide adsorber (8) is determined as a function of said quantity indicating the quantity of nitric oxides ($NO_x$) converted to nitrogen dioxide ($NO_2$) in said nitric oxide adsorber (8), of said temperature constant or constant vector/matrix ($K_T$), of said flow constant or constant vector/matrix ($K_Q$), and of said regeneration index ($I_{REG}$).

8. A method as claimed in Claim 6 or 7, wherein determining said quantity indicating the quantity of nitrogen dioxide ($NO_2$) adsorbed by said nitric oxide adsorber (8) comprises:

   - determining a quantity, indicating the quantity of nitric oxides ($NO_x$) converted to nitrogen dioxide ($NQ_2$) in said nitric oxide adsorber (8) in a given time internal ($t$), as a function of said quantity indicating the flow of nitric oxides ($NO_x$) through said nitric oxide adsorber (8), of said temperature constant or constant vector/matrix ($K_T$), of said flow constant or constant vector/matrix ($K_Q$), and of said concentration constant or constant vector/matrix ($K_C$) ;
   - determining a quantity, indicating the quantity of nitrogen dioxide ($NO_2$) adsorbed by said nitric oxide adsorber (8) in said time interval ($t$), as a function of said quantity indicating the quantity of nitric oxides ($NO_x$) converted to nitrogen dioxide ($NO_2$) in said nitric oxide adsorber (8) in said time interval ($t$), of said temperature constant or constant vector/matrix ($K_T$), of said flow constant or constant vector/matrix ($K_Q$), and of said regeneration index ($I_{REG}$); and
   - determining said quantity, indicating the quantity of nitrogen dioxide ($NO_2$) adsorbed by said nitric oxide adsorber (8), as a function of said quantity indicating the quantity of nitrogen dioxide ($NO_2$) adsorbed by said nitric oxide adsorber (8) in said time interval ($t$), and of a quantity indicating the quantity of nitrogen dioxide ($NO_2$) previously adsorbed by said nitric oxide adsorber (8)

9. A method as claimed in any one of the foregoing Claims, wherein determining a quantity indicating the flow of nitric oxides ($NO_x$) through said nitric oxide adsorber (8) comprises:

   - determining the speed (*RPM*) of said engine (1);
   - determining the torque (*TQ*) of said engine (1); and
   - determining said quantity, indicating the flow of nitric oxides ($NO_x$) through said nitric oxide adsorber (8), as a function of the speed (*RPM*) and torque (*TQ*) of said engine (1).

10. A method as claimed in any one of the foregoing Claims, wherein determining a quantity indicating the flow of nitric oxides ($NO_x$) through said nitric oxide adsorber (8) comprises:

   - measuring the concentration of nitric oxides through said nitric oxide adsorber (8); and
   - determining said quantity, indicating the flow of nitric oxides ($NO_x$) through said nitric oxide adsorber (8), as a function of the measured concentration of nitric oxides.

**Patentansprüche**

1. Verfahren zur Aktivierung der Regeneration eines Stickoxid-Adsorbers (8), welches enthält:

   Bestimmen einer Menge, welche die Menge von Stickoxiden ($NO_x$) anzeigt, welche durch den Stickoxid-Adsorber (8) adsorbiert wird; und
   Aktivieren einer Regeneration des Stickoxid-Adsorbers (8) auf Basis der Menge von adsorbierten Stickoxiden ($NO_x$);

   **dadurch gekennzeichnet, dass** das Bestimmen einer Menge, welche die Menge von Stickoxiden ($NO_x$) anzeigt, welche durch den Stickoxid-Adsorber (8) adsorbiert wird, enthält:

   Bestimmen einer Menge, welche den Fluss von Stickoxiden ($NO_x$) durch den Stickoxid-Adsorber (8) anzeigt;
   Bestimmen einer Menge, welche die Menge von Stickoxiden ($NO_x$) anzeigt, welche in dem Stickoxid-Adsorber (8) in Stickstoff-Dioxid ($NO_2$) umgewandelt wird; und
   Bestimmen einer Menge, welche die Menge von Stickstoff-Dioxid ($NO_2$) anzeigt, welche durch den Stickoxid-Adsorber (8) adsorbiert wird.

2. Verfahren nach Anspruch 1, bei welchem die Aktivierung der Regeneration des Stickoxid-Adsorbers (8) enthält:

   Bestimmen eines Regenerations-Index ($I_{REG}$) als eine Funktion der Menge, welche die Menge von Stickoxiden ($NO_x$) anzeigt, welche durch den Stickoxid-Adsorber (8) adsorbiert wird;
   Vergleichen des Regenerations-Index ($I_{REG}$) mit einem Regenerations-Schwellwert ($I_{TH}$); und
   Aktivieren einer Regeneration des Stickoxid-Adsorbers (8), wenn der Regenerations-Index ($I_{REG}$) und der Regenerations-Schwellwert ($I_{TH}$) eine vorbestimmte Beziehung erfüllen.

3. Verfahren nach Anspruch 2, bei welchem der Regenerations-Index ($I_{REG}$) als eine Funktion von der Menge, welche die Menge von Stickoxiden ($NO_x$) anzeigt, welche durch den Stickoxid-Adsorber (8) adsorbiert wird, und von einer Menge, welche die maximale Adsorbtionskapazität ($C_{MAX}$) des Stickoxid-Adsorbers (8) anzeigt, bestimmt wird.

4. Verfahren nach Anspruch 2 oder 3, bei welchem der Regenerations-Index ($I_{REG}$) die Rest-Adsorbtionskapazität des Stickoxid-Adsorbers (8) anzeigt, und der Regenerations-Schwellwert ($I_{TH}$) eine minimale Rest-Adsorbtionskapazität des Stickoxid-Adsorbers (8) anzeigt, und wobei die vorbestimmte Beziehung gleich der Bedingung ist, dass der Regenerations-Index ($I_{REG}$) kleiner oder gleich dem Regenerations-Schwellwert ($I_{TH}$) ist.

5. Verfahren nach einem der vorangehenden Ansprüche, bei welchem die Bestimmung einer Menge, welche die Menge von Stickoxiden ($NO_x$) anzeigt, welche im Stickoxid-Adsorber (8) in Stickstoff-Dioxid ($NO_2$) umgewandelt ist, enthält:

   Bestimmen einer Umwandlungs-Wirksamkeit ($K_T$, $K_Q$, $K_{Pt}$) von Stickoxiden ($NO_x$) in Stickstoff-Dioxid ($NO_2$) im Stickoxid-Adsorber (8); und
   Bestimmen der Menge, welche die Menge von Stickoxiden ($NO_x$) anzeigt, welche im Stickoxid-Adsorber (8) in Stickstoff-Dioxid ($NO_2$) umgewandelt wird, als eine Funktion von der Menge, welche den Fluss von Stickoxiden ($NO_x$) durch den Stickoxid-Adsorber (8) anzeigt, und von der Umwandlungs-Wirksamkeit ($K_T$, $K_Q$, $K_{Pt}$).

6. Verfahren nach Anspruch 5 für einen Stickoxid-Adsorber (8), welcher entlang eines AbgasVerteilers (7) einer Verbrennungsmaschine (1) positioniert ist, bei welchem die Bestimmung der Umwandlungs-Wirksamkeit ($K_T$, $K_Q$, $K_{Pt}$) von Stickoxiden ($NO_x$) in Stickstoff-Dioxid ($NO_2$) in dem Stickoxid-Adsorber (8) enthält:

   Bestimmen einer Abgastemperatur ($T_G$);
   Bestimmen eines Abgasflusses ($Q_G$);
   Bestimmen einer Temperaturkonstante oder eines Konstant-Vektor/Matrix ($K_T$), welche die Umwandlungs-Wirksamkeit von Stickoxiden ($NO_x$) in Stickstoff-Dioxid ($NO_2$) anzeigt, als eine Funktion der Abgastemperatur ($T_G$);
   Bestimmen einer Fluss-Konstante oder eines Konstant-Vektor/Matrix ($K_Q$), welche die Umwandlungs-Wirksamkeit von Stickoxiden ($NO_x$) in Stickstoff-Dioxid ($NO_2$) anzeigt, als eine Funktion des Abgasflusses ($Q_G$);
   Bestimmen einer Konzentrations-Konstante oder eines Konstant-Vektor/Matrix ($K_C$), welche die Umwandlungs-Wirksamkeit von Stickoxiden ($NO_x$) in Stickstoff-Dioxid ($NO_2$) anzeigt, als eine Funktion der Konzentration ($C_{Pt}$)

von einem Oxidationselement (Pt) in dem Stickoxid-Adsorber (8).

7. Verfahren nach Anspruch 6, bei welchem die Menge, welche die Menge von Stickstoff-Dioxid ($NO_2$) anzeigt, welche durch den Stickoxid-Adsorber (8) adsorbiert wird, als eine Funktion der Menge, welche die Menge von Stickoxiden ($NO_x$) anzeigt, welche im Stickoxid-Adsorber (8) in Stickstoff-Dioxid ($NO_2$) umgewandelt ist, von der Temperatur-Konstante oder dem Konstant-Vektor/Matrix ($K_T$), von der Fluss-Konstante oder dem Konstant-Vektor/Matrix ($K_Q$), und von dem Regenerations-Index ($I_{REG}$) bestimmt wird.

8. Verfahren nach Anspruch 6 oder 7, bei welchem die Bestimmung der Menge, welche die Menge von Stickstoff-Dioxid ($NO_2$) anzeigt, welche durch den Stickoxid-Adsorber (8) umgewandelt wird, enthält:

Bestimmen einer Menge, welche die Menge von Stickoxiden ($NO_x$) anzeigt, welche in dem Stickoxid-Adsorber (8) in einem vorgegebenen Zeitintervall (t) in Stickstoff-Dioxid ($NO_2$) umgewandelt wird, als eine Funktion der Menge, welche den Fluss von Stickoxiden ($NO_x$) durch den Stickoxid-Adsorber (8) anzeigt, von der Temperatur-Konstante oder dem Konstant-Vektor/Matrix ($K_T$), von der Fluss-Konstante oder dem Konstant-Vektor/Matrix ($K_Q$) und von der Konzentrations-Konstante oder dem Konstant-Vektor/Matrix ($K_C$);
Bestimmen einer Menge, welche die Menge von Stickstoff-Dioxid ($NO_2$) anzeigt, welche durch den Stickoxid-Adsorber (8) in dem Zeitintervall (t) adsorbiert wird, als eine Funktion von der Menge, welche die Menge von Stickoxiden ($NO_x$) anzeigt, welche in dem Stickoxid-Adsorber (8) in dem Zeitintervall (t) in Stickstoff-Dioxid ($NO_2$) umgewandelt wird, von der Temperatur-Konstante oder dem Konstant-Vektor/Matrix ($K_T$), von der Fluss-Konstante oder dem Konstant-Vektor/Matrix ($K_Q$) und von dem Regenerations-Index ($I_{REG}$); und
Bestimmen der Menge, welche die Menge von Stickstoff-Dioxid ($NO_2$) anzeigt, welche durch den Stickoxid-Adsorber (8) adsorbiert wird, als eine Funktion von der Menge, welche die Menge von Stickstoff-Dioxid ($NO_2$) anzeigt, welche durch den Stickoxid-Adsorber (8) in den Zeitintervall (t) adsorbiert wird, und von einer Menge, welche die Menge von Stickstoff-Dioxid ($NO_2$) anzeigt, welche zuvor durch den Stickoxid-Adsorber (8) adsorbiert wird.

9. Verfahren nach einem der vorangehenden Ansprüche, bei welchem die Bestimmung einer Menge, welche den Fluss von Stickoxiden ($NO_x$) durch den Stickoxid-Adsorber (8) anzeigt, enthält:

Bestimmen der Geschwindigkeit (RPM) von der Maschine (1);
Bestimmen des Drehmoments (TQ) von der Maschine (1); und
Bestimmen der Menge, welche den Fluss von Stickoxiden ($NO_x$) durch den Stickoxid-Adsorber (8) anzeigt, als eine Funktion von der Geschwindigkeit (RPM) und des Drehmoments (TQ) von der Maschine (1).

10. Verfahren nach einem der vorangehenden Ansprüche, bei welchem die Bestimmung einer Menge, welche den Fluss von Stickoxiden ($NO_x$) durch den Stickoxid-Adsorber (8) anzeigt, enthält:

Messen der Konzentration von Stickoxiden durch den Stickoxid-Adsorber (8); und
Bestimmen der Menge, welche den Fluss von Stickoxiden ($NO_x$) durch den Stickoxid-Adsorber (8) anzeigt, als eine Funktion der gemessenen Konzentration von Stickoxiden.

**Revendications**

1. Procédé de régénération par activation d'un adsorbeur d'oxyde nitrique (8) comprenant :

→ la détermination d'une quantité indiquant la quantité d'oxydes nitriques ($NO_x$) adsorbée par ledit adsorbeur d'oxyde nitrique (8) ; et
→ la régénération par activation dudit adsorbeur dioxyde nitrique (8) en fonction de la quantité d'oxydes nitriques ($NO_x$) adsorbée ;

**caractérisé en ce que** la détermination d'une quantité indiquant la quantité d'oxydes nitriques ($NO_x$) adsorbée par ledit adsorbeur dioxyde nitrique (8) comprend :

→ la détermination d'une quantité indiquant le flux d'oxydes nitriques ($NO_x$) à travers ledit adsorbeur d'oxyde nitrique (8) ;
→ la détermination d'une quantité indiquant la quantité d'oxydes nitriques ($NO_x$) convertie en dioxyde d'azote

($NO_2$) dans ledit adsorbeur d'oxyde nitrique (8) ; et
→ la détermination d'une quantité indiquant la quantité de dioxyde d'azote ($NO_2$) adsorbée par ledit adsorbeur d'oxyde nitrique (8).

**2.** Procédé selon la revendication 1, dans lequel la régénération par activation dudit adsorbeur d'oxyde nitrique (8) comprend :

→ la détermination de l'indice de régénération ($I_{REG}$) en fonction de ladite quantité indiquant la quantité d'oxydes nitriques ($NO_x$) adsorbée par ledit adsorbeur d'oxyde nitrique (8) ;
→ la comparaison dudit indice de régénération ($I_{REG}$) avec un seuil de régénération ($I_{TH}$) ; et
→ la régénération par activation dudit adsorbeur d'oxyde nitrique (8) lorsque ledit indice de régénération ($I_{REG}$) et ledit seuil de régénération ($I_{TH}$) satisfont une relation prédéterminée.

**3.** Procédé selon la revendication 2, dans lequel ledit indice de régénération ($I_{REG}$) est déterminé en fonction de ladite quantité indiquant la quantité d'oxydes nitriques ($NO_x$) adsorbée par ledit adsorbeur d'oxyde nitrique (8) et d'une quantité indiquant la capacité d'adsorption maximale ($C_{MAX}$) dudit adsorbeur d'oxyde nitrique (8).

**4.** Procédé selon la revendication 2 ou 3, dans lequel ledit indice de régénération ($I_{REG}$) indique la capacité d'adsorption résiduelle dudit adsorbeur d'oxyde nitrique (8) et ledit seuil de régénération ($I_{TH}$) indique une capacité d'adsorption résiduelle minimale dudit adsorbeur d'oxyde nitrique (8) ; et dans lequel ladite relation prédéterminée est la condition que ledit indice de régénération ($I_{REG}$) est inférieur ou égal audit seuil de régénération ($I_{TH}$) .

**5.** Procédé selon l'une quelconque des revendications précédentes, dans lequel la détermination d'une quantité indiquant la quantité d'oxydes nitriques ($NO_x$) convertie en dioxyde d'azote ($NO_2$) dans ledit adsorbeur dioxyde nitrique (8) comprend :

→ la détermination d'une efficacité de conversion ($K_T$, $K_Q$, $K_{Pt}$) des oxydes nitriques ($NO_x$) en dioxyde d'azote ($NO_2$) dans ledit adsorbeur d'oxyde nitrique (8) ; et
→ la détermination de ladite quantité indiquant la quantité d'oxydes nitriques ($NO_x$) convertie en dioxyde d'azote ($NO_2$) dans ledit adsorbeur dioxyde nitrique (8) en fonction de ladite quantité indiquant le flux d'oxydes nitriques ($NO_x$) à travers ledit adsorbeur d'oxyde nitrique (8) et de ladite efficacité de conversion ($K_T$, $K_Q$, $K_{Pt}$ ) .

**6.** Procédé selon la revendication 5, pour un adsorbeur dioxyde nitrique (8) situé le long d'un collecteur de gaz d'échappement (7) d'un moteur à combustion interne (1), dans lequel la détermination de l'efficacité de conversion ($K_T$, $K_Q$, $K_{Pt}$) des oxydes nitriques ($NO_x$) en dioxyde d'azote ($NO_2$) dans ledit adsorbeur d'oxyde nitrique (8) comprend :

→ la détermination de la température du gaz d'échappement ($T_G$) ;
→ la détermination du débit du gaz d'échappement ($Q_G$) ;
→ la détermination d'une constante de température ou d'un vecteur/matrice constant ($K_T$), indiquant l'efficacité de conversion des oxydes nitriques ($NO_x$) en dioxyde d'azote ($NO_2$), en fonction de la température du gaz d'échappement ($T_G$) ;
→ la détermination d'une constante de débit ou d'un vecteur/matrice constant ($K_Q$), indiquant l'efficacité de conversion des oxydes nitriques ($NO_x$) en dioxyde d'azote ($NO_2$), en fonction du débit du gaz d'échappement ($Q_G$) ;
→ la détermination d'une constante de concentration ou d'un vecteur/matrice constant ($K_C$), indiquant l'efficacité de conversion des oxydes nitriques ($NO_x$) en dioxyde d'azote ($NO_2$), en fonction de la concentration ($C_{Pt}$) d'un élément oxydant (Pt) dans ledit adsorbeur dioxyde nitrique (8).

**7.** Procédé selon la revendication 6, dans lequel ladite quantité indiquant la quantité de dioxyde d'azote ($NO_2$) adsorbée par ledit adsorbeur d'oxyde nitrique (8) est déterminée en fonction de ladite quantité indiquant la quantité d'oxydes nitriques ($NO_x$) convertie en dioxyde d'azote ($NO_2$) dans ledit adsorbeur d'oxyde nitrique (8), de ladite constante de température ou dudit vecteur/ matrice constant ($K_T$), de ladite constante de débit ou dudit vecteur/matrice constant ($K_Q$) et dudit indice de régénération ($I_{REG}$) .

**8.** Procédé selon la revendication 6 ou 7, dans lequel la détermination de ladite quantité indiquant la quantité de dioxyde d'azote ($NO_2$) adsorbée par ledit adsorbeur dioxyde nitrique (8) comprend :

→ la détermination d'une quantité indiquant la quantité d'oxydes nitriques ($NO_x$) convertie en dioxyde d'azote

($NO_2$) dans ledit adsorbeur d'oxyde nitrique (8) pendant un intervalle de temps (t) donné, en fonction de ladite quantité indiquant le flux d'oxydes nitriques ($NO_x$) à travers ledit adsorbeur d'oxyde nitrique (8), de ladite constante de température ou dudit vecteur/matrice constant ($K_T$), de ladite constante de débit ou dudit vecteur/matrice constant ($K_Q$) et de ladite constante de concentration ou dudit vecteur/matrice constant ($K_C$) ;

→ la détermination d'une quantité indiquant la quantité de dioxyde d'azote ($NO_2$) adsorbée par ledit adsorbeur d'oxyde nitrique (8) pendant ledit intervalle de temps (t), en fonction de ladite quantité d'oxydes nitriques ($NO_x$) convertie en dioxyde d'azote ($NO_2$) dans ledit adsorbeur d'oxyde nitrique (8) pendant ledit intervalle de temps (t), de ladite constante de température ou dudit vecteur/matrice constant ($K_T$), de ladite constante de débit ou dudit vecteur/matrice constant ($K_Q$) et dudit indice de régénération ($I_{REG}$) ; et

→ la détermination de ladite quantité indiquant la quantité de dioxyde d'azote ($NO_2$) adsorbée par ledit adsorbeur dioxyde nitrique (8), en fonction de ladite quantité de dioxyde d'azote ($NO_2$) adsorbée par ledit adsorbeur d'oxyde nitrique (8) pendant ledit intervalle de temps (t) et d'une quantité indiquant la quantité de dioxyde d'azote ($NO_2$) précédemment adsorbée par ledit adsorbeur d'oxyde nitrique (8).

9.  Procédé selon l'une quelconque des revendications précédentes, dans lequel la détermination d'une quantité indiquant le flux d'oxydes nitriques ($NO_x$) à travers ledit adsorbeur d'oxyde nitrique (8) comprend :

→ la détermination de la vitesse (RPM) dudit moteur (1) ;
→ la détermination du couple (TQ) dudit moteur (1) ; et
→ la détermination de ladite quantité indiquant le flux d'oxydes nitriques ($NO_x$) à travers ledit adsorbeur d'oxyde nitrique (8), en fonction de la vitesse (RPM) et du couple (TQ) dudit moteur (1).

10. Procédé selon l'une quelconque des revendications précédentes, dans lequel la détermination d'une quantité indiquant le flux d'oxydes nitriques ($NO_x$) à travers ledit adsorbeur d'oxyde nitrique (8) comprend :

→ la mesure de la concentration en oxydes nitriques à travers ledit adsorbeur d'oxyde nitrique (8) ; et
→ la détermination de ladite quantité indiquant le flux d'oxydes nitriques ($NO_x$) à travers ledit adsorbeur d'oxyde nitrique (8), en fonction de la concentration en oxydes nitriques mesurée.

Fig.1

EP 1 698 767 B1

Fig. 2

EP 1 698 767 B1

EP 1 698 767 B1

| 100 | 110 | 120 | 130 | 140 | | 150 |
|---|---|---|---|---|---|---|
| COMPUTE $Q_{NOx}$ | COMPUTE $M_{NOx} \rightarrow M_{NO_2}$ | COMPUTE $M_{NO_2}$ ADSORBED | COMPUTE $I_{REG}$ | COMPARE $I_{REG}$ WITH $I_{TH}$ | $I_{REG} = I_{TH}$ | ACTIVATE REGENERATION |

$I_{REG} > I_{TH}$

## Fig. 3

Fig. 4

Fig. 5

Fig. 6

Fig.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0997626 A